# EUROPÄISCHE PATENTSCHRIFT

(11) **EP 2 072 297 B1**
(45) Veröffentlichungstag und Bekanntmachung des Hinweises auf die Patenterteilung: **06.07.2011**
(21) Anmeldenummer: 08021606.2
(22) Anmeldetag: 12.12.2008
(51) Int. Cl.: B60H 1/00

(54) **Klappe, insbesondere für einen Luftkanal**
Flap, in particular for an air duct
Clapet, notamment pour un canal d'aération

(30) Priorität: 21.12.2007 DE 102007062827
(43) Veröffentlichungstag der Anmeldung: 24.06.2009
(73) Patentinhaber: Behr GmbH & Co. KG, 70469 Stuttgart (DE)
(72) Erfinder: Lang, Matthias, 70469 Stuttgart (DE); Benamira, Salah, 70180 Stuttgart (DE)
(74) Vertreter: Grauel, Andreas

(56) Entgegenhaltungen:
- EP-A- 0 800 030
- EP-A- 1 577 131
- DE-B- 1 148 118
- US-A- 2 890 716
- US-A- 5 251 654

## Beschreibung

Die Erfindung betrifft eine Klappe gemäß dem Oberbegriff des Anspruches 1, wie sie in EP 1 577 131 A1 offenbart ist.

Aus der DE 44 22 537 A1 ist eine Klappe für einen Luftführungskanal mit einem Klappenkörper bekannt, der um eine Längsachse dreh- oder schwenkbar gelagert ist. Zur Reduzierung der Herstellungskosten derartiger Klappen wird der Klappenkörper aus einem Extrusionsprofil oder Strangpressprofil gebildet, das mindestens einen Hohlraum aufweist, wobei in diesem Hohlraum Lagerachsen oder Mitnehmerteile gehalten sind. Das Profil kann abgerundete An- und Abströmbereiche aufweisen.

Ferner zeigt die DE 10 2006 033 786 A1 eine Hohlraumklappe aus einem thermoplastischen Kunststoff, welcher eine stromlinienartige Gestalt mit einem Rand und abgerundeten An- und Abströmbereichen aufweist.

Derartige Ausgestaltungen lassen noch Wünsche offen, insbesondere in Bezug auf bei hohen Strömungsgeschwindigkeiten auftretenden Geräuschen sowie des Druckverlusts.

Es ist Aufgabe der Erfindung, eine Klappe zur Verfügung zu stellen, welche in ihrer Funktion verbessert ist.

Diese Aufgabe wird gelöst durch eine Klappe mit den Merkmalen des Anspruchs 1. Vorteilhafte Ausgestaltungen sind Gegenstand der Unteransprüche.

Die Erfindung betrifft eine Klappe mit einer Schwenkachse, die zwei Klappenflügel aufweist, welche eine der Länge nach halbierte, tropfenförmige Gestalt haben. Dabei ist die halbe Tropfenform bevorzugt langgestreckt, so dass auf einer Seite eine im Wesentlichen keilförmige Gestalt mit spitzem Winkel und auf der anderen Seite, ausgehend vom dicksten Bereich der Klappe in Bezug auf den Abstand zwischen der ebenen Seite und der Seite mit halb tropfenförmiger Kontur tangential ein Kreisbogen anschließt, der etwa im rechten Winkel zur ebenen Seite endet. Der Radius des Kreisbogens weist einen Wert auf, der bevorzugt zwischen 3 mm und 25 mm, insbesondere zwischen 5 mm und 15 mm liegt. Der spitze Winkel zwischen den Klappenflächen an dem, dem kreisbogenförmigen. Ende gegenüberliegenden Ende der Klappenflügel beträgt bevorzugt zwischen 2° und 45°, insbesondere zwischen 5° und 30°.

Hierbei ist das abgerundete, dicke Ende der Klappenflügel durch das freie, von der Schwenkachse entfernte Ende gebildet. Dies ermöglicht eine besonders vorteilhafte Strömungsausbildung bei engen Spalten, also kurz bevor die Klappenflügel mit ihren Enden an der Wand anliegen um einen Fluidkanal zu schließen. Das im Bereich der Schwenkachse angeordnete andere Ende der Klappenflügel endet konstruktiv bedingt bevorzugt nicht spitz sondern abgerundet.

Erfindungsgemäß weist die Klappe zwei Klappenflügel mit einer gemeinsamen Schwenkachse auf. Dabei können die Klappenflügel unabhängig oder in Abhängigkeit voneinander (z.B. gegengleich) betätigt werden.

Der maximale Winkel zwischen den beiden Klappenflügeln beziehungsweise den ebenen Flächen der beiden Klappenflügel ist kleiner als 180°, insbesondere bevorzugt beträgt er maximal 90° +/- 30°, besonders bevorzugt 90° +/- 20° und ganz besonders bevorzugt 90° +/- 10°.

Dieser von den Klappenflügeln eingeschlossene Winkel ist besonders bevorzugt fluidanströmseitig angeordnet, jedoch kann die Klappe auch anders herum im Fluidkanal angeordnet sein, so dass zuerst die Schwenkachsenseite der Klappe angeströmt wird.

Zur Verringerung oder Vermeidung von Geräuschen durch das durchströmende Fluid weist die Klappe vorzugsweise am freien, von der Schwenkachse entfernten Ende des oder der Klappenflügel einen vorstehenden Randbereich auf, in dem rinnenartige Strukturen ausgebildet sind. Ist kein vorstehender Randbereich vorgesehen, so können rinnenartige Strukturen auch direkt am freien, von der Schwenkachse entfernten Ende des Klappenflügels ausgebildet sein.

Diese rinnenartigen Strukturen sind besonders bevorzugt keilförmig, bogenförmig und/oder wellenförmig ausgebildet.

Eine derartige Klappe kann in einem Fluidkanal angeordnet sein, insbesondere bevorzugt ist sie jedoch in einem Luftkanal angeordnet. Eine derartige Klappe ist bevorzugt in einem Luftkanal angeordnet, über welchen den Düsen eines Fahrzeuginnenraums Luft zugeführt wird.

Besonderes vorteilhaft ist die Anordnung einer derartigen Klappe in einer Klimaanlage, insbesondere in einem Luftkanal einer Klimaanlage, die zumindest ein Gehäuse, ein Gebläse und insbesondere einen Heizköper und/oder einen Verdampfer und/oder weitere Klappen wie Mischklappen oder Verteilklappen aufweist.

Die Schwenkachse der Klappe ist vorzugsweise luftabströmseitig der Klappenflügel angeordnet, jedoch kann sie auch luftanströmseitig der Klappenflügel angeordnet sein.

Im Folgenden wird die Erfindung anhand mehrerer Ausführungsbeispiele unter Bezugnahme auf die Zeichnung im Einzelnen erläutert. Es zeigen:
- Fig. 1: einen Schnitt durch den Mischraumbereich einer Fahrzeugklimaanlage mit einer in einem abzweigenden Luftkanal angeordneten Klappe gemäß dem ersten Ausführungsbeispiel,
- Fig. 2: eine perspektivische Ansicht der Klappe von Fig. 1 im den Luftkanal versperrenden Zustand,
- Fig. 3: eine Fig. 2 entsprechende Ansicht der Klappe im den Luftkanal freigebenden Zustand,
- Fig. 4a-c: Schnittdarstellungen durch einen Luftkanal mit einer Klappe gemäß dem zweiten Ausführungsbeispiel in unterschiedlichen Öffnungszuständen,
- Fig. 5a: ein Klappenflügel der Klappe gemäß dem zweiten Ausführungsbeispiel,
- Fig. 5b: eine Variante des Klappenflügels von Fig. 5a, und
- Fig. 6: einen Schnitt durch einen Luftkanal mit einer Klappe gemäß dem dritten Ausführungsbeispiel.

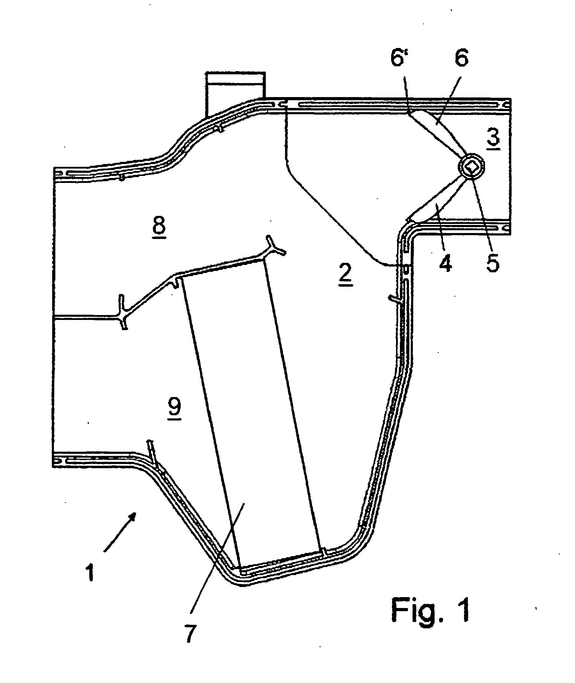

Fig. 1 zeigt einen Längsschnitt durch einen Teil eines Klimaanlagengehäuses 1 einer Fahrzeugklimaanlage im Bereich des Mischraums 2 und eines austretenden Luftkanals 3 zur Mitteldüse. Über diesen Luftkanal 3 ist temperierte Luft dem Fahrzeuginnenraum zuführbar. Die Regelung des Luftmassenstroms durch den Luftkanal 3 zur Mitteldüse erfolgt mit Hilfe einer im Luftkanal 3 angeordneten Klappe 4. Die Luft wird von einem in der Figur 1 nicht dargestellten Gebläse über einen nicht dargestellten Verdampfer geleitet und anschließend in einen Luftweg der über den Heizkörper 7 führt und einen oberhalb des Heizkörpers 7 befindlichen, den Heizkörper 7 also umgehenden Luftweg aufgeteilt. Das Verhältnis der Anteile der Luftmassenströme in dem den Heizkörper umgehenden Kaltluftkanal 8 und dem Warmluftkanal 9, in welchem der Heizkörper 7 angeordnet ist, wird über eine in der Figur nicht dargestellte Mischklappe oder Mischklappenanordnung gesteuert oder geregelt, wodurch sich eine gewünschte Temperatur im Mischraum 2 einstellt.

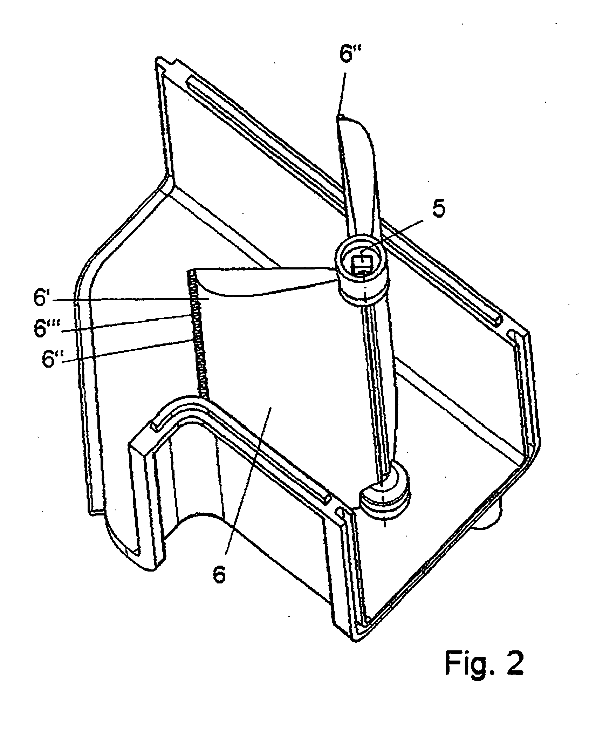

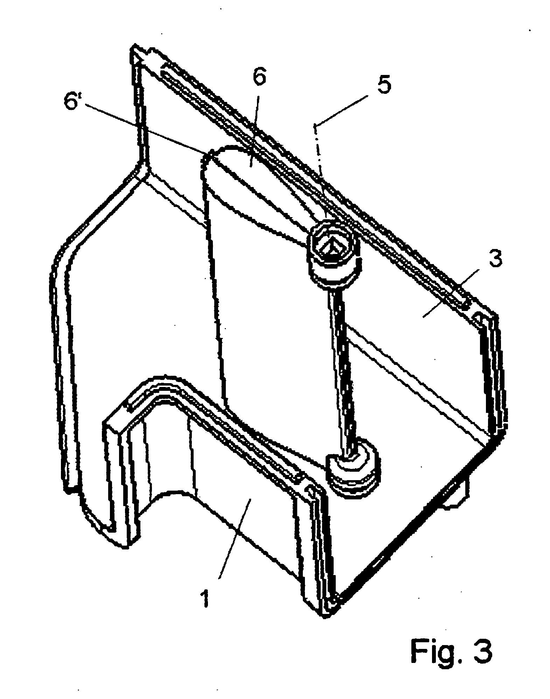

Die Klappe 4 ist gemäß dem vorliegenden Ausführungsbeispiel zweiteilig ausgebildet, wobei sie zwei relativ zueinander um eine Schwenkachse 5 verschwenkbare Klappenflügel 6 aufweist. Die Schwenkachse 5 ist in Bezug auf den Querschnitt des Luftkanals 3 in der Mitte desselben angeordnet. Die beiden Klappenflügel 6 erstrecken sich von der Schwenkachse 5 aus im vollständig geöffneten Zustand der Klappe 4, d.h. bei geöffnetem Luftkanal 3, entgegen der normalen Luftströmungsrichtung, so dass sie von der Seite ihrer freien Enden 6' her angeströmt werden, wobei die Klappenflügel 6 in diesem vollständig geöffneten Zustand mit den einander zugewandten Seiten aneinander flächig anliegen, wie in Fig. 3 dargestellt. Ober eine geeignete Getriebeverbindung der beiden Klappenflügel 6 erfolgt vorliegend eine gleichzeitige und gleichmäßige Schließ- bzw. Öffnungsbewegung der beiden Klappenflügel 6 durch ein gegengleiches Verschwenken um die gemeinsame Schwenkachse 5. Der Winkel zwischen den beiden Klappenflügeln 6 im den Luftkanal 3 vollständig verschließenden Zustand, der in den Figuren 1 und 2 dargestellt ist, beträgt vorliegend ca. 90°, so dass jeder der Klappenflügel 6 - auf Grund der gleichmäßigen Schwenkbewegung - im verschlossenen Zustand des Luftkanals 3 in einem Winkel von etwa 45° zur Kanalwand angeordnet ist.

Die Klappe 4 ist derart ausgebildet, dass sie im aneinanderliegenden Zustand der beiden Klappenflügel 6 annähernd langgestreckt tropfenförmig ausgebildet ist (vgl. Fig. 3). Luftanströmseitig, d.h. an den freien Enden 6' der Klappenflügel 6, sind vorliegend über die tropfenförmige Gestalt vorstehende Randbereiche 6" mit rinnenartigen Strukturen 6"' ausgebildet. Hierbei sind von außen her keilförmige Nuten in den Randbereichen 6" ausgebildet, welche dazu dienen Pfeiffgeräusche bei fast geschlossenem Luftkanal 3, d.h. bei nahezu an den Luftkanalwänden anliegenden freien Enden 6', zu verringern oder möglichst ganz zu vermeiden.

Die einzelnen Klappenflügel 6 sind als Hohlraumkörper ausgebildet, jedoch können sie beispielsweise auch als Vollkörper, als seitlich offene Hohlprofile oder als, profilierte Schalen ausgebildet sein, wobei im letzten Fall im aneinander anliegenden Zustand keine großflächige Anlage möglich ist, sondern nur eine Anlage entlang den Rändern. Zusätzlich können die offenen Hohlprofile mit einer schallabsorbierenden Schicht oder Füllung, wie beispielsweise einem Schaummaterial oder einem Vlies, insbesondere Textilvlies versehen sein.

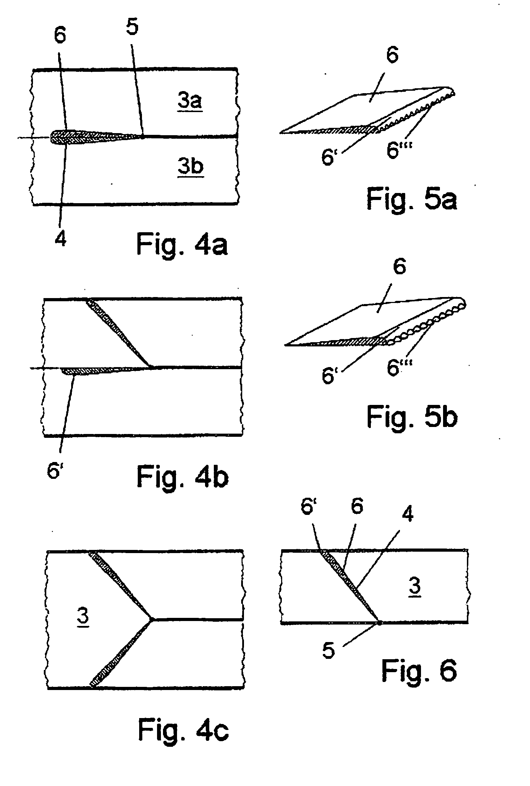

In den Figuren 4a bis 4c ist als zweites Ausführungsbeispiel einer Klappe 4 wiederum eine zweiteilige Klappe vorgesehen, jedoch dient diese Klappe der Luftverteilung auf zwei luftabströmseitig derselben angeordnete Luftkanäle - 3a und 3b, wofür die Klappenflügel 6 unabhängig voneinander einstellbar sind. Die gemeinsame Schwenkachse 5 der beiden Klappenflügel 6 ist am Ende einer Trennwand angeordnet, welche die beiden Luftkanäle 3a, 3b voneinander trennt. Auch in diesem Fall beträgt der maximale Winkel zwischen den beiden Klappenflügeln 6 etwa 90°, so dass die einzelnen Klappenflügel 6 im den entsprechenden Luftkanal sperrenden Zustand in einem Winkel von ca. 45° an der entsprechenden Luftkanalwand anliegen.

Die Ausgestaltung der Klappenflügel 6 entspricht im Wesentlichen derjenigen des zuvor beschriebenen Ausführungsbeispiels, jedoch ist - im Unterschied hierzu - kein vorstehender Randbereich 6" vorgesehen, sondern keilförmig rinnenartige Strukturen 6'" sind direkt in das freie Ende 6' der Klappenflügel 6 auf den einander zugewandten Seiten ausgebildet, wie in Fig. 5 dargestellt.

Im Falle einer Umkehr der Strömungsrichtung kann die gleiche Anordnung auch für die Mischung zweier Luftströme verwendet werden.

Gemäß einer Variante in Bezug auf die Strukturen 6"' sind die rinnenartigen Strukturen 6"' im freien Ende 6' des Klappenflügels 6, wie in Fig. 5b dargestellt, halbkreisförmig ausgebildet.

Beliebige andere rinnenartige Strukturen sind möglich, wobei natürlich auch verschiedene Geometrien, wie keil- und wellenförmige Nuten, miteinander kombiniert sein können.

In Fig. 6 ist eine Klappe 4 dargestellt, welche durch einen einzigen Klappenflügel 6 gebildet ist, dessen Gestalt derjenigen der Klappenflügel der zuvor beschriebenen Ausführungsbeispiele entspricht, d.h. entlang der Längsachse geschnitten, langgestreckt tropfenförmig ausgebildet ist. Hierbei liegt die ebene Seite an der Wandfläche an, um den Luftkanal 3 freizugeben, wobei das freie Ende 6' der Klappe 4 luftanströmseftig der Schwenkachse 5 angeordnet ist. Im geschlossenen Zustand der Klappe 4 ist wiederum ein 45°-Winkel zur Wandfläche des Luftkanals 3 ausgebildet. Auch in diesem Fall sind Strukturen (nicht dargestellt) am freien Ende ausgebildet, um Geräusche bei geringen Spaltbreiten zwischen der Luftkanalwand und dem freien Ende 6' der Klappe 4 zu verringern oder ganz zu verhindern.

### Bezugszeichenliste

- 1: Klimaanlagengehäuse
- 2: Mischraum
- 3, 3a, 3b: Luftkanal
- 4: Klappe
- 5: Schwenkachse
- 6: Klappenflügel
- 6': freies Ende
- 6": Randbereich
- 6"': Struktur
- 7: Heizköper
- 8: Kaltluftkanal
- 9: Warmluftkanal

## Patentansprüche

1. Klappe (4) mit zwei zueinander um eine gemeinsame Schwenkachse (5) schwenkbaren Klappenflügeln (6), wobei die gemeinsame Schwenkachse jeweils an einem Ende der Klappenflügel angeordnet ist, **dadurch gekennzeichnet,**
**dass** die Klappenflügel jeweils eine der Länge nach halbierte Tropfenform aufweisen, wobei die abgerundeten Enden durch die freien, von der Schwenkachse (5) entfernten Enden (6') gebildet sind, und dass der maximale Winkel zwischen den beiden Klappenflügeln (6) kleiner als 180° ist, insbesondere zwischen 60° und 120° beträgt.

2. Klappe nach Anspruch 1, **dadurch gekennzeichnet, dass** der maximale Winkel zwischen den beiden Klappenflügeln (6) zwischen 70° und 110°, insbesondere zwischen 80° und 100°, beträgt.

3. Klappe nach einem der vorhergehenden Ansprüche, **dadurch gekennzeichnet, dass** am freien, von der Schwenkachse (5) entfernten Ende (6') des Klappenflügels (6) ein vorstehender Randbereich (6") ausgebildet ist und/oder dass am freien, von der Schwenkachse (5) entfernten Ende (6') des Klappenflügels (6) rinnenartige Strukturen (6"') ausgebildet sind.

4. Klappe nach Anspruch 3, **dadurch gekennzeichnet, dass** die rinnenartigen Strukturen (6"') keilförmig, bogenförmig und/oder wellenförmig ausgebildet sind.

5. Fluidkanal mit einer Klappe (4) gemäß einem der vorhergehenden Ansprüche.

6. Fluidkanal nach Anspruch 5, **dadurch gekennzeichnet, dass** die Schwenkachse (5) der Klappe (4) luftabströmseitig des oder der Klappenflügel (6) angeordnet ist.

7. Fluidkanal nach Anspruch 5 oder 6, **dadurch gekennzeichnet, dass** die Klappe (4) einen einzigen Klappenflügel (6) aufweist, welcher mit seiner gewölbten Seite in Richtung Fluidkanal (3) gerichtet und mit seiner ebenen Seite in Richtung Fluidkanalwand gerichtet angeordnet ist, wobei der Klappenflügel (6) im geöffneten Zustand flächig an der Fluidkanalwand anliegt.

8. Fluidkanal nach einem der Ansprüche 5 bis 7, **dadurch gekennzeichnet, dass** die Schwenkachse (5) mittig im Luftkanal (3) angeordnet ist.

9. Fluidkanal nach einem der Ansprüche 5 bis 8, **dadurch gekennzeichnet, dass** die Klappe (4) an einer Kanalverzweigung angeordnet ist, wobei die Schwenkachse (5) am Ende einer Trennwand zwischen den sich verzweigenden Fluidkanälen angeordnet ist.

10. Fluidkanal nach einem der Ansprüche 5 bis 8, **dadurch gekennzeichnet, dass** die Klappe (4) an einer Kanalzusarnmenführung angeordnet ist, wobei die Schwenkachse (5) am Ende einer Trennwand zwischen den sich treffenden Fluidkanälen angeordnet ist.

11. Fluidkanal nach einem der Ansprüche 5 bis 9, **dadurch gekennzeichnet, dass** im den Fuidkanal verschließenden Zustand der Klappe (4) der oder die Klappenflügel (6) einen Winkel zur benachbarten Fluidkanalwand von 45° +/- 20° einnimmt, wobei die gekrümmte Seite des Klappenflügels (6) an der Fluidkanalwand anliegt.

12. Klimaanlage mit einer Klappe nach einem der Ansprüche 1 bis 4 und/oder einem Fluidkanal nach einem der Ansprüche 5 bis 11, **dadurch gekennzeichnet, dass** die Klimaanlage ein Gehäuse und zumindest eines der folgenden Elemente wie ein Gebläse, einen Verdampfer, einen Heizwärmetauscher, einen elektrischen Heizwärmetauscher, eine Mischklappe, eine Mischklappenanordnung und/oder eine oder mehrere Luftverteilkerteilklappen aufweist.

## Claims

1. A flap (4) comprising two flap vanes (6) which can be swivelled toward one another about a common pivot axis (5), wherein the common pivot axis is disposed at one end of each of the flap vanes,
**characterized in that** each of the flap vanes has the shape of a droplet bisected along the length thereof, wherein the rounded ends are formed by the free ends (6') opposite the pivot axis (5), and the maximum angle between the two flap vanes (6) is smaller than 180°, in particular between 60° and 120°.

2. The flap according to claim 1, **characterized in that** the maximum angle between the two flap vanes (6) is between 70° and 110°, in particular between 80° and 100°.

3. The flap according to one of the preceding claims, **characterized in that** a projecting edge region (6") is formed on the free end of the flap vane (6) opposite the pivot axis (5), and/or channel-like structures (6"') are formed on the free end (6') of the flap vane (6) opposite the pivot axis (5).

4. The flap according to claim 3, **characterized in that** the channel-like structures (6"') have a wedge shape, a curved shape, and/or wavy shape.

5. A fluid duct comprising a flap (4) according to one of the preceding claims.

6. The fluid duct according to claim 5, **characterized in that** the pivot axis (5) of the flap (4) is disposed on the air outflow side of the flap vane(s) (6).

7. The fluid duct according to claim 5 or 6, **characterized in that** the flap (4) comprises a single flap vane (6) disposed such that the arched side thereof is oriented in the direction of the fluid duct (3), and the flat side of which is oriented in the direction of the fluid duct wall, wherein the flap vane (6), in the opened state, rests squarely against the fluid duct wall.

8. The fluid duct according to one of the claims 5 to 7, **characterized in that** the pivot axis (5) is disposed in the center of the air duct (3).

9. The fluid duct according to one of the claims 5 to 8, **characterized in that** the flap (4) is disposed at a duct branch, wherein the pivot axis (5) is disposed at the end of a partition between the branching fluid ducts.

10. The fluid duct according to one of the claims 5 to 8, **characterized in that** the flap (4) is disposed at a duct confluence, wherein the pivot axis (5) is disposed at the end of a partition between the merging fluid ducts.

11. The fluid duct according to one of the claims 5 to 9, **characterized in that**, in the state of the flap (4) in which the fluid duct is closed, the flap vane(s) (6) form an angle with the adjacent fluid duct wall of 45° +/-20°, wherein the curved side of the flap vane (6) rests against the fluid duct wall.

12. An air conditioning system comprising a flap according to one of the claims 1 to 4, and/or a fluid duct according to one of the claims 5 to 11, **characterized in that** the air conditioning system comprises a housing and at least one of the following elements, such as a blower, an evaporator, a heat exchanger, an electric heat exchanger, a blending door, a blending door arrangement, and/or one or more air-distribution flaps.

## Revendications

1. Volet (4) comprenant deux ailettes de volet (6) pouvant pivoter l'une par rapport à l'autre autour d'un axe de pivotement commun (5), où l'axe de pivotement commun est disposé à chaque fois au niveau d'une extrémité des ailettes de volet,
**caractérisé en ce que** les ailettes de volet présentent à chaque fois une forme de goutte partagée en deux dans le sens de la longueur, où les extrémités arrondies sont formées par les extrémités libres (6') éloignées de l'axe de pivotement (5), et **en ce que** l'angle maximum entre les deux ailettes de volet (6) est inférieur à 180°, est compris en particulier entre 60° et 120°.

2. Volet selon la revendication 1, **caractérisé en ce que** l'angle maximum entre les deux ailettes de volet (6) est compris entre 70° est 110°, en particulier entre 80° et 100°.

3. Volet selon l'une ou l'autre des revendications précédentes, **caractérisé en ce qu'**une zone de bordure saillante (6") est configurée au niveaux de l'extrémité libre (6') de l'ailette de volet (6), éloignée de l'axe de pivotement (5) , et / ou **en ce que** des structures (6"') de type goulottes sont configurées au niveau de l'extrémité libre (6') de l'ailette de volet (6), éloignée de l'axe de pivotement (5).

4. Volet selon la revendication 3, **caractérisé en ce que** les structures (6"') de type goulottes sont configurées en étant cunéiformes, de forme arquée et / ou de forme ondulée.

5. Conduit de fluide comprenant un volet (4) selon l'une quelconque des revendications précédentes.

6. Conduit de fluide selon la revendication 5, **caractérisé en ce que** l'axe de pivotement (5) du volet (4) est disposé côté sortie d'air de l'ailette ou des ailettes de volet (6).

7. Conduit de fluide selon la revendication 5 ou 6, **caractérisé en ce que** le volet (4) présente une seule ailette de volet (6) qui, avec son côté bombé, est dirigée en direction du conduit de fluide (3) et, avec son côté plat, disposée en étant dirigée en direction de la paroi du conduit de fluide, où l'ailette de volet (6) lorsqu'elle est ouverte, vient en appui sur la surface de la paroi du conduit de fluide.

8. Conduit de fluide selon l'une quelconque des revendications 5 à 7, **caractérisé en ce que** l'axe de pivotement (5) est disposé au milieu du conduit d'air (3).

9. Conduit d'air selon l'une quelconque des revendications 5 à 8, **caractérisé en ce que** le volent (4) est disposé au niveau d'une ramification du conduit, où l'axe de pivotement (5) est disposé, au niveau de l'extrémité d'une paroi de séparation, entre les conduits de fluide se ramifiant.

10. Conduit de fluide selon l'une quelconque des revendications 5 à 8, **caractérisé en ce que** le volet (4) est disposé au niveau d'une réunion des conduits, où l'axe de pivotement (5) est disposé au niveau de l'extrémité d'une paroi de séparation, entre les conduits de fluide qui se rencontrent.

11. Conduit de fluide selon l'une quelconque des revendications 5 à 9, **caractérisé en ce que**, lorsque le volet (4) ferme le conduit de fluide, l'ailette ou les ailettes de volet (6) forme(nt) un angle de 45° +/- 20° par rapport à la paroi contiguë du conduit de fluide, où le côté courbe de l'ailette de volet (6) vient en appui sur la paroi du conduit de fluide.

12. Système de climatisation comprenant un volet selon l'une quelconque des revendications 1 à 4 et / ou un conduit de fluide selon l'une des revendications 5 à 11, **caractérisé en ce que** le système de climatisation présente un carter et au moins l'un des éléments suivants, tels qu'une soufflante, un évaporateur, un échangeur de chaleur de chauffage, un échangeur de chaleur de chauffage électrique, un volet mélangeur, un agencement de volets mélangeurs est / ou un ou plusieurs volet(s) répartiteur(s) d'air.
